# EUROPÄISCHE PATENTSCHRIFT

(11) **EP 2 792 811 B1**
(45) Veröffentlichungstag und Bekanntmachung des Hinweises auf die Patenterteilung: **03.07.2019**
(21) Anmeldenummer: 14001411.9
(22) Anmeldetag: 17.04.2014
(51) Int. Cl.: E04F 11/18, F16B 7/04, F16B 9/02

(54) **Befestigungsvorrichtung**
Attachment device
Dispositif de fixation

(30) Priorität: 18.04.2013 DE 202013003652 U
(43) Veröffentlichungstag der Anmeldung: 22.10.2014
(73) Patentinhaber: Brenk, Klaus, 79183 Waldkirch (DE)
(72) Erfinder: Brenk, Klaus, 79183 Waldkirch (DE)
(74) Vertreter: Drobnik, Stefanie

(56) Entgegenhaltungen:
- EP-A1- 2 333 201
- EP-A1- 2 447 549
- EP-A1- 2 565 344
- DE-U1-202010 013 712

## Beschreibung

Die Erfindung betrifft eine Vorrichtung zum nachträglichen Befestigen wahlweise eines vorbestimmten stabförmigen oder plattenförmigen Elements an einem Stab einer Stabkonstruktion.

Die Stabkonstruktion ist dabei im allgemeinsten Sinne zu verstehen. So kann es sich bei der Stabkonstruktion um Geländer, Zäune, Gitter etc. handeln.

Geländer, wie sie für Balkone, Treppen oder dgl. verwendet werden, weisen oftmals Stäbe aus Metall auf, welche insbesondere parallel zueinander verlaufen. Diese Stäbe können dabei entweder vertikal, horizontal oder aber auch schräg verlaufen. Bei den Stäben kann es sich dabei um Rundstäbe, Vierkantstäbe, Flachstäbe etc. handeln.

Oftmals besteht das Bedürfnis, derartige Geländer nachträglich mit zusätzlichen Elementen, beispielsweise mit einem abgesetzten, zweiten Handlauf oder einer Sichtschutzplatte, Verglasung o. ä. plattenförmigen Elementen zu versehen. Dies ist bislang nur mit einem großen technischen Aufwand möglich, da bisher übliche Befestigungselemente lediglich zur Montage in der Montagephase, d. h. an offenen Stäben, geeignet sind, nicht jedoch für bereits installierte Geländer. Zudem eignen sich die bekannten Befestigungsvorrichtungen nur für einen Typ an Elementen, Platten oder Stäben.

So ist aus EP 2 565 344 A1 eine Befestigungsvorrichtung für plattenförmige Elemente an einer Geländerstrebe bekannt, die in einer Aufnahmenut eines zweiteiligen Befestigungsteils aufgenommen werden kann, wobei die zu befestigende Platte zwischen dem Befestigungsteil und einem darin eindrehbaren Klemmkopf festgelegt wird.

Der Erfindung liegt daher die Aufgabe zugrunde, eine technisch einfache Vorrichtung zu schaffen, mit der wahlweise ein vorbestimmtes stabförmiges Element, insbesondere ein Handlaufhalter, oder ein plattenförmiges Element, insbesondere eine Sichtschutzplatte, nachträglich an einem Stab einer Stabkonstruktion, insbesondere einer Strebe eines Geländers, befestigt werden kann.

Diese Aufgabe wird gelöst durch eine Befestigungsvorrichtung mit den Merkmalen des unabhängigen Anspruchs 1.

Weiterbildungen werden durch die Unteransprüche beschrieben.

In einer ersten Ausführungsform weist die Befestigungsvorrichtung zwei Befestigungsteile auf, die unter formschlüssiger Umschließung des Stabes miteinander verbunden werden können. Eines der beiden Befestigungsteile hat eine durchgehende Bohrung, die zur Fixierung des zu befestigenden Elements vorgesehen ist. In die Bohrung kann wahlweise von der einen Seite her das zu befestigende stabförmige Element eingeführt werden und von der anderen Seite her das Element mittels einer Schraube fixiert werden oder es kann mittels der Bohrung ein plattenförmiges Element, etwa die beschriebene Sichtschutzplatte, befestigt werden. Hierzu ist eine Tellerschraube mit einem Gewinde vorgesehen und die Bohrung hat ein korrespondierendes Gegengewinde, in das die Tellerschraube eindrehbar ist, wobei zwischen der Tellerschraube und dem Befestigungsteil mit der Bohrung das plattenförmige Element sandwichartig festlegbar ist. Ferner ist das erste Befestigungsteil als Spannkopf mit einem Gewinde und das zweite Befestigungsteil als Klemmkopf mit einem dazu korrespondierenden Gegengewinde ausgebildet. Der Spannkopf weist zwei zusammenfügbare Spannbacken auf, die in zusammengefügtem Zustand das Gewinde des Spannkopfs bilden. Der Spannkopf oder zumindest eine der Spannbacken weist/weisen ferner eine Aufnahmenut zur Aufnahme des Stabes der Stabkonstruktion auf. Des Weiteren ist eine Einrichtung zum Zusammenhalten der beiden zusammengesetzten Spannbacken vorgesehen. Dabei handelt es sich um einen aufsteckbaren Klemmring, der auf die beiden Spannbacken aufgesteckt wird. Der Klemmkopf ist von einem der Ausnehmung zur Aufnahme des Stabes abgewandten Ende des Gegengewindes her so weit einschraubbar, dass eine Klemmkraft auf den Stab der Stabkonstruktion ausgeübt werden kann. Die durchgehende Bohrung zur Fixierung des zu befestigenden Elements liegt hierbei in dem Klemmkopf vor und verläuft bevorzugt entlang dessen Längsachse.

Die beiden Befestigungsteile werden dabei so zusammengefügt, dass sie im zusammengefügten Zustand den Stab - wie ausgeführt - formschlüssig umschließen. Die Fixierung der beiden Befestigungsteile erfolgt insbesondere dadurch, dass sie miteinander verschraubt werden, um den Stab einzuklemmen. Die Klemmung erfolgt also durch Einschrauben des Klemmkopfs in das erste Befestigungsteil, so dass der Klemmkopf die Klemmkraft zur Halterung des Stabes bereitstellt; gewissermaßen "umschließt" auch der Klemmkopf in einem Umgangsbereich den Stab der Stabkonstruktion, jedoch nicht komplett, da er nachträglich auf die existierende Stabkonstruktion aufgeschoben werden soll. Einen Klemmkopf vorzusehen bietet Vorteile, da hierüber die Klemmkraft sehr genau eingestellt werden kann und aufgrund des im Bezug zu den Abmessungen der Befestigungsteile vergleichsweise großen Gewindedurchmessers auch sehr hohe Klemmkräfte möglich sind, die sich zum Befestigen auch sehr schwerer Handläufe bzw. schwerer Platten eignen. Es kann hierbei entweder vorgesehen sein, dass der Klemmkopf direkt den Stab der Stabkonstruktion berührt oder, dass durch den Klemmkopf das erste Befestigungsteil oder eine weitere separate "Spannbacke" angezogen wird.

Zur Montage des stabförmigen Elements, insbesondere des Handlaufhalters, wird dieser zunächst von einer von der Ausnehmung zur Aufnahme des Stabes der Stabkonstruktion abgewandten Seite her in die Bohrung in die durchgehende Bohrung gesteckt und dann von der anderen Seite verschraubt. Mit "Ausnehmung" ist hierin der Bereich des/der Befestigungs-teil(e) gemeint, in dem der Stab der Stabkonstruktion formschlüssig aufgenommen wird. Die Ausnehmung kann sich beispielsweise von einer Trennebene der beiden Befestigungsteile in eines oder beide der Befestigungsteile erstrecken. Das stabförmige Element weist hierzu korrespondierend eine Sacklochbohrung mit einem Innengewinde auf. Beim Eindrehen der Schraube wird das stabförmige Element in die Bohrung hereingezogen und dort fixiert, wobei sein Sitz in der Bohrung eine formschlüssige Sicherung gegen Verkippen bereitstellt. Erst nach dem Einführen des Handlaufhalters in die durchgehende Bohrung werden die beiden Befestigungsteile formschlüssig mit dem Stab der Stabkonstruktion verbunden.

Die Montage ist vorteilhaft mit der erfindungsgemäßen Befestigungsvorrichtung auch weltweit erstmalig an bereits installierten, d. h. geschlossenen Stabsystemen möglich, ohne dass geschweißt werden müsste; die Montage ist hierdurch auch für den Laien ohne Spezialwerkzeug zu bewerkstelligen. Die Stäbe können dabei vorzugsweise einen runden, rechteckigen oder länglich rechteckigen Querschnitt aufweisen.

Mit der erfindungsgemäßen Befestigungsvorrichtung können jedoch nicht nur stabförmige Elemente wie Handlaufhalter nachträglich montiert werden; es eignet sich vorteilhaft auch zur Montage von plattenförmigen Elementen wie Sichtschutzplatten. Das erfindungsgemäße Befestigungselement kann beide Montageaufgaben gleichermaßen erfüllen, es ist daher nur ein Befestigungselement vorzusehen, was Lagerhaltung und Beschaffung für einen ausführenden Betrieb vereinfacht. Zur Montage des plattenförmigen Elements kann das Befestigungselement auch zuerst mit dem Stab der Stabkonstruktion verbunden werden und nachträglich die Platte mit der Tellerschraube daran befestigt werden, da die durchgehende Bohrung eines der Befestigungselemente ja von außen zugänglich ist.

Indem der Klemmkopf als eines der Befestigungsteile ausgebildet wird, wird eine technisch einfache Möglichkeit zum Befestigen von stabförmigen oder plattenförmigen Elementen geschaffen, wobei die Befestigungsvorrichtung nur aus wenigen Einzelteilen besteht. Es liegt folglich die durchgehende Bohrung im Klemmkopf vor, so dass das zu befestigende stabförmige Element wie oben beschrieben von der einen Seite her in die Bohrung des Klemmkopfs eingeführt und von der anderen Seite her verschraubt wird.

Der Spannkopf ist dazu vorgesehen, nachträglich auf den Stab der Stabkonstruktion aufgesetzt zu werden und diesen formschlüssig zu umschließen und der Klemmkopf ist in das Gewinde des Spannkopfes eindrehbar. Die durchgehende Bohrung zur Fixierung des zu befestigenden Elements liegt in dem Klemmkopf vor und verläuft bevorzugt entlang dessen Längsachse. Diese Ausführungsform eignet sich besonders gut zur nachträglichen Befestigung eines Handlaufhalters oder von Sichtschutzplatten oder Verglasungen oder ähnlichen Vorrichtungen an einem Stab bzw. einer Geländerstrebe mit einem runden oder annähern runden, d. h. polygonalen, Querschnitt oder zumindest einem Querschnitt mit einem Höhe/Breite-Verhältnis nahe 1.

Hierbei ist vorgesehen, dass die Schraube zur Fixierung des zu befestigenden Elements von der Seite des Klemmkopfes, die zu dem Stab der Stabkonstruktion bzw. zu der Ausnehmung zu dessen Aufnahme weist, durch die Bohrung im Klemmkopf geführt wird und in das Gewindesackloch des stabförmigen Elements eingedreht wird.

Die Spannbacken umschließen nach ihrem Zusammenfügen formschlüssig den Stab des Geländers, so dass der Stab in diesen Spannbacken gehalten wird.

Der Klemmring, der auf die beiden Spannbacken aufgesteckt wird, dient als eine Art Manschette und hilft bei der Montage, das unbeabsichtigte Auseinenderfallen der Hälften zu vermeiden.

Dadurch ist eine Befestigungsvorrichtung geschaffen, mittels welcher insbesondere sogar nachträglich ein stabförmiges Element, beispielsweise ein Nachrüst-Handlaufhalter zur Montage eines abgesetzten zweiten Handlaufs, oder eine Platte an einem Stabgeländer, befestigt werden kann. Es ist lediglich erforderlich, dass der Spannkopf so ausgebildet ist, dass er den Stab bzw. die Strebe des Geländers, an der der Handlaufhalter befestigt werden soll, umschließt. Mit Umschließen ist hierbei nicht nur ein vollständiges Umgreifen gemeint, sondern auch das teilweise Umgreifen, beispielsweise in einem Umfangsbereich von 120-180°.

Gemäß einer weiteren Ausführungsform kann die Aufnahmenut zur Aufnahme des Stabes der Stabkonstruktion einen runden oder rechteckigen Querschnitt hat/haben, bevorzugt einen flachen Rechteckquerschnitt.
Die Breite der Aufnahmenut entspricht dabei im Wesentlichen dem Durchmesser des Stabes, so dass dieser ohne großes seitliches Spiel oder sogar satt in dieser Aufnahmenut angeordnet werden kann, wobei "flach" etwa ein Breite/Höhe-Verhältnis von 2 und größer ist. Diese Ausführungsform betrifft die Befestigung an dem Stab der Stabkonstruktion, d. h. am Beispiel zur Montage des Handlaufhalters, die Befestigung an den Streben des Geländers.

Gemäß einer weiteren Weiterbildung weist der Klemmring insbesondere auch eine Aufnahmerinne auf, in der der Stab der Stabkonstruktion aufgenommen werden kann. Die Aufnahmerinne des Klemmrings wirkt hier etwa mit der Aufnahmenut des/der Spannbacken bzw. des Spannkopfes zusammen, um den Stab der Stabkonstruktion besonders sicher zu fixieren.

Gemäß einer bevorzugten technischen Realisierung ist das Gewinde des Spannkopfs ein Innengewinde, während das Gegengewinde des Klemmkopfs ein Außengewinde ist. Damit bei dem Spannbacken-Paar die beiden Spannbacken nicht auseinanderfallen, ist, wie oben beschrieben, eine Einrichtung vorgesehen, die sie zusammenhält.

In einer weiteren Ausführungsform kann direkt zwischen dem Klemmkopf und dem Spannkopf bzw. zwischen dem Klemmkopf und dem Klemmring sandwichartig ein plattenförmiges Element festgelegt werden. Hierzu kann am Klemmkopf bevorzugt ein Bund vorgesehen werden, der an der Platte zur Anlage gebracht werden kann. Hierdurch wird eine Möglichkeit geschafften, um an einem existierenden Geländer zusätzlich zu einem nachzurüstenden Handlauf auch noch mit dem gleichen Befestigungselement eine Sichtschutzplatte nachzurüsten oder zwei parallele Platten anzubringen, wobei eine der Platten, wie beschrieben über die Tellerschraube fixiert wird und die andere durch den Klemmkopf. Zur Befestigung der Platte muss diese eine Durchbohrung haben, deren Ränder beispielsweise auch durch eine Hülse geschützt werden können.

Schließlich wird noch vorgeschlagen, dass der Klemmkopf eine Bohrung aufweisen kann, die bevorzugt normal zu einer Längsachse des Klemmkopfs verläuft. Diese Bohrung dient dazu, dass in diese ein Bolzen hineingesteckt werden kann. Die Bohrung dient quasi als Befestigungshilfsmittel, indem eine Art Dorn einführbar ist und aufgrund der Ausrichtung ein Drehmoment zum Anziehen des Klemmkopfes übertragen werden kann. Auf diese Weise lässt sich der Klemmkopf auf einfache Weise sehr stark anziehen.

Ausführungsbeispiele der erfindungsgemäßen Befestigungsvorrichtung zum Befestigen eines Elements an einem Stab einer Stabkonstruktion werden nachfolgend anhand der Figuren beschrieben. Die Figuren sind lediglich schematische Darstellungen von Ausführungsbeispielen der Erfindung.

In diesen zeigen:
- **Fig. 1a**: eine nicht erfindungsgemäße Ausführungsform einer Befestigungsvorrichtung,
- **Fig. 1b**: eine Draufsicht auf die nicht erfindungsgemäße Befestigungsvorrichtung in **Fig. 1a**,
- **Fig. 2**: eine erfindungsgemäße Ausführungsform der Befestigungsvorrichtung in einer Explosionsdarstellung,
- **Fig. 3**: eine Draufsicht auf eine Ausführungsform der Befestigungsvorrichtung mit einer zu befestigenden Platte in einer Explosionsdarstellung,
- **Fig. 4**: eine Draufsicht auf eine weitere nicht erfindungsgemäße Ausführungsform der Befestigungsvorrichtung mit einer zu befestigenden Platte in einer Explosionsdarstellung.

An einem figurativ nicht dargestellten Stab in Form eines rechteckigen Flachstabes einer Stabkonstruktion, beispielsweise in Form eines Geländers, soll ein Element 1 in Form eines Handlaufhalters oder in Form einer Platte befestigt werden.

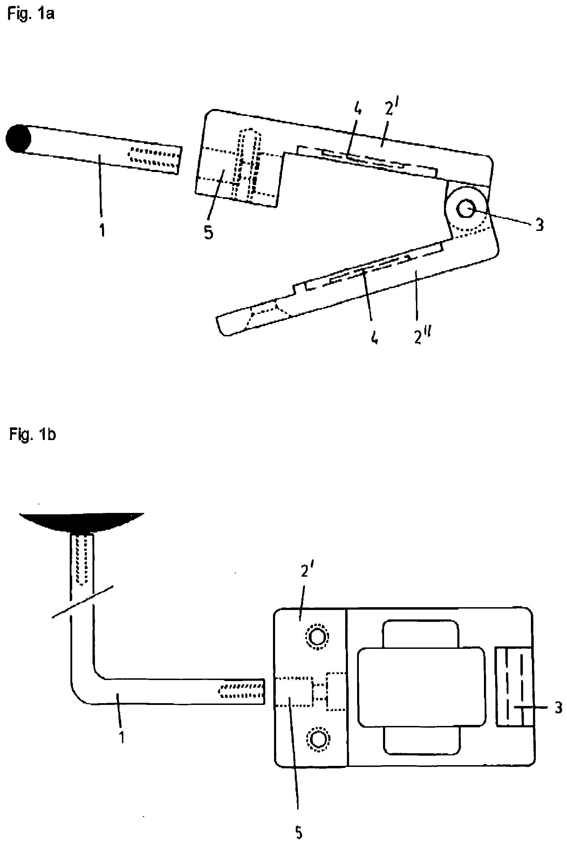

Die nicht erfindungsgemäße Befestigungsvorrichtung, die in den **Fig. 1a** und **Fig. 1b** gezeigt ist, weist zwei plattenförmige Befestigungsteile 2',2" auf, welche über ein Scharnier 3 gelenkig miteinander verbunden sind. Die Innenseiten der beiden Befestigungsteile 2',2" sind dabei so profiliert, dass sie im geschlossenen Zustand den Stab formschlüssig umschließen können. Hierzu weisen die Befestigungsteile 2',2" jeweils eine Ausnehmung auf, die sich von der Trennebene weg erstreckt und so quasi einen Aufnahmeraum für den Stab bilden. Zur Verbesserung des Reibschlusses weisen die beiden Innenseiten der plattenförmigen Befestigungsteile 2', 2" jeweils plattenförmige Zwischenkörper 4 aus Gummi auf.

Das eine Befestigungsteil 2' weist eine durchgehende Bohrung 5 auf, welche sich in Längsrichtung der Befestigungsvorrichtung erstreckt.

Die Funktionsweise ist wie folgt: Vor der Montage der Befestigungsvorrichtung am Stab befinden sich die beiden Befestigungsteile 2',2" im aufgeklappten Zustand, wie er in **Fig. 1a** dargestellt ist. In dieser Position kann ein Element 1 in Form eines stabförmigen Handlaufhalters an der Befestigungsvorrichtung befestigt werden. Zu diesem Zweck wird das stabförmige Element 1 in die Bohrung 5 des einen Befestigungsteils 2' eingeschoben. Da es sich hier um eine durchgehende Bohrung 5 handelt, wird von der anderen Seite her eine Schraube in die Stirnseite des stabförmigen Elements 1 eingedreht und somit diese im Befestigungsteil 2 fixiert. Der Schraubenkopf ist hierbei in einem der Ausnehmung nahen Abschnitt der durchgehenden Bohrung 5 versenkbar, so dass die Schraube die Aufnahme des Stabes nicht behindert.

In dieser Position wird dann die Befestigungsvorrichtung an den Flachstab des Geländers angelegt und anschließend über das Scharnier 3 geschlossen. Dadurch umschließen die beiden plattenförmigen Befestigungsteile 2',2" formschlüssig den Stab, während die Zwischenkörper 4 einen reibschlüssigen Anteil beitragen. Zur Sicherung werden Schrauben eingedreht.

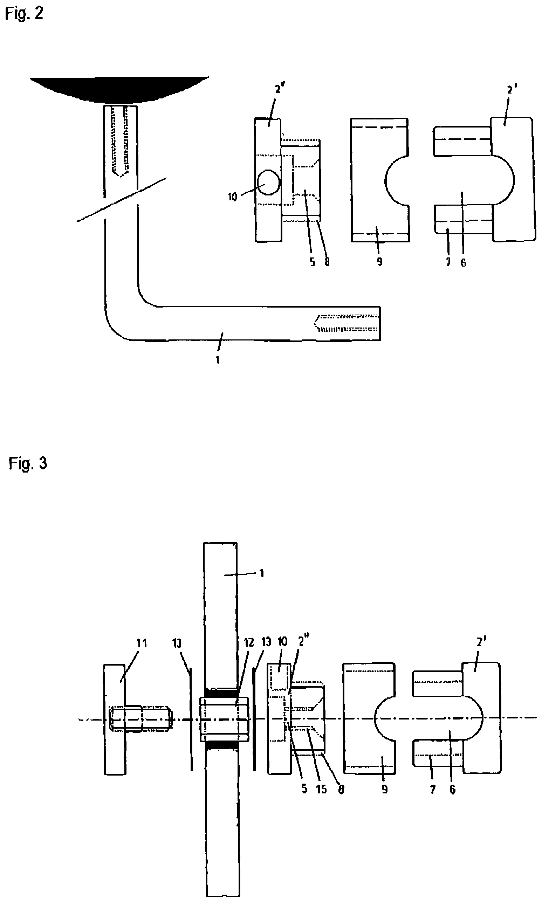

Die erfindungsgemäße Ausführungsform der Befestigungsvorrichtung in **Fig. 2** dient der Befestigung eines Elements 1 wiederum in Form eines stabförmigen Handlaufhalters für eine nachträgliche Montage eines abgesetzten, zweiten Handlaufs an einem Rundstabgeländer. Auch hier sind zwei Befestigungsteile 2',2" vorgesehen. Dabei definiert das Befestigungsteil 2' einen Spannkopf und das Befestigungsteil 2" einen Klemmkopf.

Das Befestigungsteil 2' besitzt eine Aufnahmenut 6 zur Aufnahme des Rundstabes des Geländers. Dabei ist die Breite dieser Aufnahmenut 6 unwesentlich größer als der Durchmesser der Rundstrebe. Dies bedeutet, dass das Befestigungsteil 2' mit seiner Aufnahmenut 6 problemlos auf den Rundstab aufgeschoben werden kann. Weiterhin ist in diesem Befestigungsteil 2' noch ein Gewinde in Form eines Innengewindes 7 ausgebildet.

Das zweite Befestigungsteil 2" in Form eines Klemmkopfes weist ein Gegengewinde 8 auf und hat eine durchgehende Bohrung 5, in die das zu befestigende Element eingeführt werden kann.

Schließlich ist noch ein Klemmring 9 vorgesehen, der eine Aufnahmerinne aufweist, die die Aufnahmenut 6 des ersten Befestigungsteils ergänzt um einen vollständigen Aufnahmebereich für den Stab der Stabkonstruktion zu bilden.

Die Funktionsweise ist wie folgt: Zunächst wird in die durchgehende Bohrung 5 das Element 1 in Form des stabförmigen Handlaufhalters eingeschoben. Von der anderen Seite her erfolgt die Fixierung dieses stabförmigen Elements 1 mittels einer eingedrehten Schraube, deren Kopf wiederum versenkbar ist. Anschließend wird das Befestigungsteil 2' in Form des Spannkopfes mit seiner Aufnahmenut 6 entweder satt (so dass er nach dem Aufschieben durch Reibschluss auf dem Rundstab gehalten ist) oder mit nur geringem Spiel auf den Rundstab aufgeschoben. Danach wird von der anderen Seite her der Klemmring 9 aufgeschoben. Dieser kommt dabei mit einer entsprechenden halbkreisförmigen Aufnahmerinne an dem Rundstab zur Anlage.

Schließlich wird zur Sicherung der Klemmkopf in Form des zweiten Befestigungsteils 2" mit seinem Gegengewinde 8 auf das Gewinde 7 des Spannkopfes in Form des ersten Befestigungsteils 2' aufgeschraubt. Um das Befestigungsteil 2" fest anziehen zu können, kann in eine Bohrung 10 ein Bolzen oder ein Dorn, bevorzugt ein Hakenschlüssel, eingesetzt werden, so dass der Klemmkopf in seine Klemmrichtung gedreht werden kann.

In **Fig. 3** ist eine erfindungsgemäße Befestigungsvorrichtung in einer Explosionsansicht gezeigt, mittels der eine Platte 1 an dem Stab der Stabkonstruktion befestigt werden kann. Es handelt sich bei der Befestigungsvorrichtung im Grunde um die gleiche Befestigungsvorrichtung wie in **Fig. 2** gezeigt. Das Befestigungselement kann gleichermaßen zur Montage einer Platte und zur Montage eines stabförmigen Elements verwendet werden.

Zur Montage der Platte 1 wird eine Tellerschraube 11 durch eine Bohrung in der Platte, in der eine Hülse 12 geführt ist, gesteckt und in ein Gewinde 15, das in der Bohrung 5 vorliegt, so dass es sich um eine Gewindebohrung handelt, eingeschraubt ist. Die Platte 1 kann daher zwischen dem zweiten Befestigungsteil 2" als Klemmkopf und dem Kopf der Tellerschraube 11 festgelegt werden. Um eine verschiebesichere Montage zu erreichen, sind zwischen dem Kopf der Tellerschraube 11 und der Platte 1, sowie zwischen der Platte 1 und dem zweiten Befestigungsteil als Klemmkopf jeweils Gummischeiben 13 angeordnet, die auch dazu dienen, bei einem spröden Material das Reißen aufgrund zu hoher Schraubenvorspannung zu verhindern. Das Gewinde 15 im Klemmkopf behindert nicht das Durchstecken einer Schraube zur Befestigung des stabförmigen Elements, das von außen in die Bohrung 5 eingesteckt ist, da die Bohrung 5 an ihrer äußeren Öffnung einen größeren Durchmesser hat.

Nicht figurativ gezeigt ist die direkte Befestigung einer zusätzlichen Platte. Hierzu kann zwischen dem zweiten Befestigungsteil 2" in Form des Klemmkopfes und dem Klemmring 9 eine weitere Platte eingebracht werden, die eine Bohrung aufweist, durch die das Außengewinde 8 des Klemmkopfes bzw. zweiten Befestigungsteils 2" geführt wird, während die Platte beim Anziehen des Klemmkopfes an dem Bund des Klemmkopfes zum Anliegen kommt. Prinzipiell kann die zusätzliche Platte aber auch in Kombination mit dem stabförmigen Handlaufhalter (siehe **Fig. 2**) an der Befestigungsvorrichtung angebracht werden.

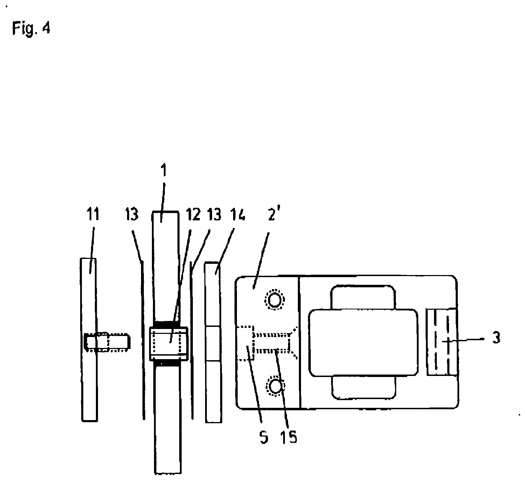

Bei der in **Fig. 4** gezeigten, nicht erfindungsgemäßen Befestigungsvorrichtung handelt es sich im Grunde um die gleiche Befestigungsvorrichtung wie in **Fig. 1a,b** gezeigt, nur ist hier in der Bohrung 5 ein Gewinde 15 vorgesehen. Das Funktionsprinzip zur Befestigung der Platte 1 ist identisch mit dem unter **Fig. 3** beschriebenen. Hier ist allerdings zusätzlich zu den Gummischeiben 13 eine weitere Scheibe 14 vorgesehen, die aus einem Material mit höherer Festigkeit als die Gummischeibe 13 besteht. Auch die in **Fig. 4** gezeigte Befestigungsvorrichtung eignet sich wahlweise zur Montage von stabförmigen oder plattenförmigen Elementen.

## Patentansprüche

1. Vorrichtung zum nachträglichen Befestigen eines vorbestimmten stabförmigen Elements (1) oder eines plattenförmigen Elements (1) an einem Stab einer Stabkonstruktion, wobei
die Vorrichtung zwei Befestigungsteile (2',2") aufweist, die unter formschlüssiger Umschließung des Stabes miteinander verbindbar sind,
wobei eines der beiden Befestigungsteile (2',2") eine durchgehende Bohrung (5) aufweist,
**dadurch gekennzeichnet, dass**
wahlweise
- in die Bohrung (5) von der einen Seite her das zu befestigende stabförmige Element (1) einführbar ist und von der anderen Seite her das Element (1) mittels einer Schraube fixierbar ist oder
- eine Tellerschraube (11) mit einem Gewinde (7) vorgesehen ist und die Bohrung (5) ein korrespondierendes Gegengewinde (15) hat, wobei die Tellerschraube (11) in die Bohrung (5) eindrehbar ist und zwischen der Tellerschraube (11) und dem Befestigungsteil (2',2") mit der Bohrung (5) das plattenförmige Element (1) sandwichartig festlegbar ist,
und wobei
- das erste Befestigungsteil (2') als Spannkopf mit einem Gewinde (7) ausgebildet ist und zwei zusammenfügbare Spannbacken aufweist, die in einem zusammengefügten Zustand das Gewinde (7) definieren, wobei der Spannkopf oder zumindest eine der Spannbacken eine Aufnahmenut (6) zum formschlüssigen Umschließen des Stabes der Stabkonstruktion aufweist/aufweisen, und wobei ein Klemmring (9) als eine Einrichtung zum Zusammenhalten der beiden zusammengesetzten Spannbacken vorgesehen ist, der auf die beiden Spannbacken aufsteckbar ist,
- das zweite Befestigungsteil (2") als Klemmkopf mit einem zu dem Gewinde (7) des Spannkopfes korrespondierenden Gegengewinde (8) ausgebildet und in das erste Befestigungsteil (2') eindrehbar ist, so dass eine Klemmkraft auf den Stab der Stabkonstruktion ausübbar ist,
- und wobei die durchgehende Bohrung (5) zur Fixierung des zu befestigenden Elements (1) in dem Klemmkopf vorliegt, bevorzugt entlang einer Längsachse des Klemmkopfs.

2. Vorrichtung nach Anspruch 1,
**dadurch gekennzeichnet, dass**
die Aufnahmenut (6) zur Aufnahme des Stabes der Stabkonstruktion bevorzugt einen runden oder rechteckigen Querschnitt, besonders bevorzugt einen flachen Rechteckquerschnitt, hat.

3. Vorrichtung nach Anspruch 1 oder 2,
**dadurch gekennzeichnet, dass**
der Klemmring (9) eine Aufnahmerinne aufweist, in der der Stab der Stabkonstruktion aufnehmbar ist.

4. Vorrichtung nach zumindest einem der Ansprüche 1 bis 3,
**dadurch gekennzeichnet, dass**
das Gewinde (7) des Spannkopfs ein Innengewinde ist und das Gegengewinde (8) des Klemmkopfs ein Außengewinde ist.

5. Vorrichtung nach einem der Ansprüche 1 bis 4,
**dadurch gekennzeichnet, dass**
direkt zwischen dem Klemmkopf und dem Spannkopf oder zwischen dem Klemmkopf und dem Klemmring (9) sandwichartig das plattenförmige Element (1) festlegbar ist.

6. Vorrichtung nach zumindest einem der Ansprüche 1 bis 5,
**dadurch gekennzeichnet, dass**
der Klemmkopf eine Bohrung (10) zum Anziehen mittels eines einsteckbaren Bolzens aufweist, wobei die Bohrung (10) bevorzugt normal zu einer Längsachse des Klemmkopfs verläuft.

## Claims

1. A device for subsequently mounting a predetermined rod-shaped element (1) or a plate-like element (1) to a rod of a bar construction, wherein
the device has two connectable retaining components (2', 2") that positively encapsulate the rod,
wherein one of the two retaining components (2', 2") has a through bore (5), **characterised in that**
selectively
- the rod-shaped element (1) to be mounted is insertable into the bore (5) from one side and the element (1) is fixable by means of a screw from the other side, or
- a plate screw (11) with a thread (7) is provided and the bore (5) has a corresponding mating thread (15), wherein the plate screw (11) can be screwed into the bore (5) and where the plate-like element (1) is fixable in a sandwich-type arrangement between the plate screw (11) and the retaining component (2', 2") with the bore (5), and wherein
- the first retaining component (2') is designed as a grip head with a thread (7) and has two joinable clamping jaws that define the thread (7) in a joined state, wherein the grip head or at least one of the clamping jaws has a receiving groove (6) for positively encapsulating the rod of the bar construction, and wherein a clamping ring (9) that is attachable to the two clamping jaws is provided as a means for holding together the two joined clamping jaws,
- the second retaining component (2") is designed as a clamping head with a mating thread (8) corresponding to the thread (7) of the grip head, which can be screwed into the first retaining component (2') so that a clamping force can be exerted on the rod of the bar construction,
- and wherein for fixing the element (1) to be mounted, the through bore (5) is provided in the clamping head, preferably along a longitudinal axis of the clamping head.

2. Device according to claim 1,
**characterised in that**
the receiving groove (6) for receiving the rod of the bar construction preferably has a round or rectangular cross section, particularly preferably a flat rectangular cross section.

3. Device according to claim 1 or 2,
**characterised in that**
the clamping ring (9) has a receiving channel for receiving the rod of the bar construction.

4. Device according to at least one of the claims 1 to 3,
**characterised in that**
the thread (7) of the grip head is an internal thread and the mating thread (8) of the clamping head is an external thread.

5. Device according to one of the claims 1 to 4,
**characterised in that**
the plate-like element (1) can be fixed in a sandwich-type arrangement directly between the clamping head and the grip head or between the clamping head and the clamping ring (9).

6. Device according to at least one of the claims 1 to 5,
**characterised in that**
the clamping head has a bore (10) for tightening by means of an insertable bolt, wherein the bore (10) preferably extends orthogonal to a longitudinal axis of the clamping head.

## Revendications

1. Dispositif pour la fixation ultérieure d'un élément (1) en forme de barreau prédéterminé ou d'un élément (1) en forme de plaque à un barreau d'une construction en barreaux, dans lequel
le dispositif présente deux parties de fixation (2', 2") qui peuvent être connectées l'une à l'autre par entourage par conjugaison de formes du barreau,
dans lequel une des deux parties de fixation (2', 2") présente un alésage traversant (5),
**caractérisé en ce que**
au choix
- l'élément (1) en forme de barreau à fixer peut être introduit dans l'alésage (5) par un des côtés et l'élément (1) peut être fixé au moyen d'une vis par l'autre côté, ou
- un boulon de courroie (11) est pourvu d'un filetage (7) et l'alésage (5) a un filetage conjugué correspondant (15), dans lequel le boulon de courroie (11) peut être vissé dans l'alésage (5) et l'élément (1) en forme de plaque peut être fixé en sandwich à l'alésage (5) entre le boulon de courroie (11) et la partie de fixation (2', 2"),
et dans lequel
- la première partie de fixation (2') est réalisée en tant que tête de serrage avec un filetage (7) et présente deux mâchoires de serrage pouvant être assemblées qui définissent le filetage (7) dans un état assemblé, dans lequel la tête de serrage ou au moins une des mâchoires de serrage présente/présentent une rainure de réception (6) pour l'entourage par conjugaison de formes du barreau de la construction en barreaux, et dans lequel une bague de serrage (9) est prévue en tant qu'installation pour le maintien ensemble des deux mâchoires de serrage assemblées, laquelle peut être enfichée sur les deux mâchoires de serrage,
- la seconde partie de fixation (2") est réalisée en tant que tête de blocage avec un filetage conjugué (8) correspondant au filetage (7) de la tête de serrage et peut être vissée dans la première partie de fixation (2') de sorte qu'une force de serrage peut être exercée sur le barreau de la construction en barreaux,
- et dans lequel l'alésage traversant (5) est présent dans la tête de blocage pour la fixation de l'élément (1) à fixer, de préférence le long d'un axe longitudinal de la tête de blocage.

2. Dispositif selon la revendication 1,
**caractérisé en ce que**
la rainure de réception (6) pour la réception du barreau de la construction en barreaux a de préférence une section transversale ronde ou rectangulaire, de manière particulièrement préférée une section transversale rectangulaire plate.

3. Dispositif selon la revendication 1 ou 2,
**caractérisé en ce que**
la bague de serrage (9) présente un canal de réception dans lequel le barreau de la construction en barreaux peut être reçu.

4. Dispositif selon au moins une des revendications 1 à 3,
**caractérisé en ce que**
le filetage (7) de la tête de serrage est un filetage interne et le filetage conjugué (8) de la tête de blocage est un filetage externe.

5. Dispositif selon une des revendications 1 à 4,
**caractérisé en ce que**
l'élément (1) en forme de plaque peut être fixé en sandwich directement entre la tête de blocage et la tête de serrage ou entre la tête de blocage et la bague de serrage (9).

6. Dispositif selon au moins une des revendications 1 à 5,
**caractérisé en ce que**
la tête de blocage présente un alésage (10) pour le serrage au moyen d'un boulon pouvant être enfiché, dans lequel l'alésage (10) s'étend de préférence perpendiculairement à un axe longitudinal de la tête de blocage.
